# EUROPÄISCHE PATENTANMELDUNG

(11) **EP 3 139 049 A1**
(43) Veröffentlichungstag der Anmeldung: **08.03.2017**
(21) Anmeldenummer: 16184985.6
(22) Anmeldetag: 19.08.2016
(51) Int. Cl.: F16B 47/00

(54) **BEFESTIGUNGSELEMENT ZUR ORTSFESTEN ANBRINGUNG VON GEGENSTÄNDEN AN EINER MONTAGEUNTERLAGE**

(30) Priorität: 06.09.2015 DE 102015114905
(71) Anmelder: nie wieder bohren ag, 63450 Hanau (DE)
(72) Erfinder: Braun, Frank, 63584 Gründau (DE)
(74) Vertreter: Alber, Norbert

(57) **Zusammenfassung**

Es wird ein Befestigungselement (10) zur ortsfesten Anbringung von Gegenständen, wie Handtuchhalter, Regale, Leuchten oder dgl. Ausstattungsartikel, an einer Wand, Decke oder dgl. Fläche, insbesondere in mit Kacheln oder mit dgl. Wandverkleidungen ausgestatteten Räumen, beschrieben, wobei das Befestigungselement einen Grundkörper (11) umfasst, der zur Aufnahme eines Elementes zur Halterung des Gegenstandes ausgebildet ist, und wobei der Grundkörper mittels eines aushärtbaren Haft- und Verbindungsmittels (3) an der Wand befestigbar ist.

## Beschreibung

Die vorliegende Erfindung betrifft ein Befestigungselement zur ortsfesten Anbringung von Gegenständen, wie Handtuchhalter, Regale, Leuchten, Haltegriffe, Badschränke oder dergleichen Ausstattungsartikel, an einer Montageunterlage, welche zum Beispiel eine Wand, Decke, Boden oder dergleichen Fläche ist, z. B. in mit Kacheln oder mit dergleichen Wandverkleidungen ausgestatteten Räumen.

Aus der WO 03/036106 A1 ist ein Befestigungselement der in Rede stehenden Art bekannt. Es umfasst auch einen Grundkörper, der mit Hilfe eines aushärtbaren Haft- und Verbindungsmittels an einer Montageunterlage, z. B. einer Wand, befestigbar ist. Bei dem Haft-und Verbindungsmittel handelt es sich regelmäßig um Klebstoffe, die abhängig von den Umgebungsbedingungen aushärten, wobei die Klebstoffe bis zu 12 Stunden und mehr Zeit zum Aushärten benötigen. Dementsprechend lange dauert es, bis das bekannte Befestigungselement voll belastet werden kann. Der Grundkörper dieses Befestigungselements ist nach einer Ausführungsvariante vorteilhaft ein zumindest teilweise offenporiger Körper. Bei im Handel angebotenen Exemplaren dieses Befestigungselementes ist der Grundkörper ein aus Metallpulver hergestelltes Sinterteil. Körper aus Sintermetallen sind schwer und zudem relativ teuer.

Bei einem weiteren Befestigungselement nach der JP 2005-146126 A wird zu dessen Befestigung an einer Montageunterlage, d.h. zur Aushärtung des verwendeten Verbindungsmittels, in das zuvor an dem Befestigungselement aufgetragene feuchtigkeitshärtende oder feuchtigkeitsvernetzende Haft-und Verbindungsmittel ein Geflecht von hydrophilen Schnüren eingelegt, welche zuvor mit Wasser getränkt wurden, aus welchen das Verbindungsmittel zur Aushärtung Wasser ziehen kann. Zu intensiv mit Wasser getränkte Schnüre wirken negativ auf den Aushärteprozess des Verbindungsmittels. Das Handling für die Vorbereitung des Befestigungselementes nebst dem Verbindungsmittel für den Klebevorgang ist zudem nicht praktikabel. Das Einlegen bzw. Eindrücken des nassen Geflechts von Schnüren in das Verbindungsmittel ist nicht nur umständlich sondern bedarf auch einiger Nacharbeit, da seitlich von der betreffenden Fläche des Befestigungselementes bzw. seines Grundkörpers Verbindungsmittel abfließt, welches bereits vor dem Klebevorgang entfernt werden sollte. Durch das Eindrücken des Geflechts von Schnüren in das Verbindungsmittel und beim anschließenden Andrücken des für den Klebevorgang vorbereiteten Befestigungsmittels an die Montageunterlage wird das Verbindungsmittel an den Kontaktflächen der Montageunterlage und des Befestigungsmittels partiell durch die Schnüre verdrängt. Somit wird die zur Verfügung stehende Kontaktfläche zwischen Verbindungsmittel und Montageunterlage sowie zwischen Verbindungsmittel und dem Grundkörper des Befestigungselements wieder verringert, was negativ bezüglich der Haltekraft / Belastbarkeit der Befestigung ist. Zudem wird beim Andrücken des für den Klebevorgang vorbereiteten Befestigungsmittels an die Montageunterlage das Geflecht von Schnüren zusammengedrückt, wodurch ein Teil der von den Schnüren aufgenommenen Flüssigkeit (Wasser) wieder ausgequetscht wird, wodurch im Verbindungsmittel Wasserblasen entstehen. Hierdurch wird die Haltekraft / Belastbarkeit des Verbindungsmittels geschwächt.
Aus der Praxis sind dem Anmelder zudem Fälle bekannt, bei denen für die Vorbereitung der Klebung des Befestigungselementes, welches im Handel in großen Stückzahlen als "Do it your self"-Artikel angeboten wird, das Nassmachen der Schnüre statt mit purem Wasser mit anderer Flüssigkeit, welche oft auch mit Kohlensäure versetzt ist, erfolgte. Diese Vorgehensweise, welche durch den Hersteller des Befestigungselementes nicht beeinflusst werden kann, wirkt negativ auf den Aushärteprozess des Verbindungsmittels einschließlich der Qualität der Klebung. Qualitätsmängel in einer so - entgegen der Gebrauchsanleitung - hergestellten Klebung / Befestigung werden von manchen Anwendern dem Hersteller bzw. dem Anbieter / Händler des Befestigungselementes angedichtet, was durchaus auch rufschädigend sein kann.
Durch das Geflecht von Schnüren, aber auch durch einzeln eingelegte Schnüre, wird die zur Befestigung / Klebung des Befestigungselementes mit der Montageunterlage notwendige Schicht des Verbindungsmittels zudem inhomogen, wodurch die erzeugte Klebeverbindung geringere Festigkeitseigenschaften aufweist. Die Klebeverbindung wird also durch solche Zusatzstoffe im Verbindungsmittel geschwächt.

Deshalb besteht die Aufgabe der vorliegenden Erfindung darin, ein Befestigungselement zur ortsfesten Anbringung von Gegenständen an einer Montageunterlage zu schaffen, welches die vorgenannten Nachteile verringert, insbesondere bei annähernd gleichen Festigkeitseigenschaften bzw. realisierbaren Haltekräften kostengünstiger herstellbar ist.

Diese Aufgabe wird mittels eines Befestigungselements mit den Merkmalen des Anspruches 1 gelöst. Weitere Ausgestaltungen der vorliegenden Erfindung sind mit den Unteransprüchen 2 bis 10 offenbart.

Der vorliegenden Erfindung liegt die Erkenntnis der Erfinder zugrunde, dass dem verwendeten Haft- und Verbindungsmittel einerseits zum Aushärten genügend Wasser bereitgestellt werden muss und andererseits nicht übermäßig Wasser bereitgestellt werden darf.
Mit der Erfindung erfolgt die Bereitstellung des Wassers derart, dass das Haft- und Verbindungsmittel während der Zeitspanne seiner Aushärtung stets über seine gesamte Kontaktfläche mit dem Grundkörper des Befestigungselementes, welche späterhin - also nach der vollständigen Aushärtung - für die erreichbaren Festigkeitseigenschaften bzw. realisierbaren Haltekräfte mit maßgeblich ist, die jeweils benötigte Menge an Wasser aus dem Wasserreservoir erhält und andererseits an bzw. in dem Haft-und Verbindungsmittel kein überschüssiges Wasser vorhanden ist, welches Wassereinschlüsse bilden könnte. Zudem wird eine maximale Klebefläche zwischen dem Haft- und Verbindungsmittel und dem Grundkörper des Befestigungselementes und zwischen dem Haft- und Verbindungsmittel und der Montageunterlage, d. h. den betreffenden Kontaktfläche / Klebeflächen, erzielt.

Erfindungsgemäß wird also ein Befestigungselement zur ortsfesten Anbringung von Gegenständen, wie Handtuchhalter, Regale, Leuchten, Haltegriffe, Badschränke oder dergleichen Ausstattungsartikel, an einer Montageunterlage, wie zum Beispiel an einer Wand, Decke, Boden oder dergleichen Fläche, z. B. in mit Kacheln oder mit dergleichen Wandverkleidungen ausgestatteten Räumen, vorgeschlagen, wobei das Befestigungselement einen Grundkörper umfasst, der zur Aufnahme eines Elementes zur Halterung des Gegenstandes ausgebildet ist, und wobei der Grundkörper mittels eines feuchtigkeitshärtenden oder - vernetzenden Haft- und Verbindungsmittels an der Montageunterlage befestigbar ist, und wobei der Grundkörper wenigstens teilweise derart als Wasserreservoir ausgebildet ist oder in ihm ein Wasserreservoir derart aufgenommen ist, dass das Haft- und Verbindungsmittel aus einer Kontaktfläche des Grundkörpers, an welcher das Haft- und Verbindungsmittel zur Klebung anliegt, zum Aushärten Wasser aus dem Wasserreservoir erhält, wobei das Wasserreservoir zumindest teilweise aus Holz oder holzartigem organischen Material besteht.
Die Kontaktfläche des Grundkörpers ist also die Grenzfläche zwischen dem Haft- und Verbindungsmittel und der Fläche bzw. Flächen des Grundkörpers, welche in Verbindung mit der Montageunterlage den Klebespalt bilden, in welchem sich das Haft-und Verbindungsmittel befindet, welches nach seiner Aushärtung das Bindeglied zwischen der Montageunterlage und dem Befestigungselement ist.

Nach einer Ausführungsvariante der Erfindung ist das Wasserreservoir vollständig aus Holz oder holzartigem organischen Material.
Nach einer weiteren Ausführungsvariante ist das Wasserreservoir vollständig aus einem Holz oder holzartiges organisches Material enthaltenden Verbundwerkstoff.

Nach einer weiteren Ausführungsvariante ist der Grundkörper selbst vollständig oder teilweise aus Holz oder holzartigem organischen Material.
Nach einer weiteren Ausführungsvariante ist das aus Holz oder holzartigem organischen Material bestehende oder aus einem Holz oder holzartiges organisches Material enthaltenden Verbundwerkstoff bestehende Wasserreservoir in dem Grundkörper aufgenommen und fixiert, wobei eine Fläche dieses eingesetzten und fixierten Wasserreservoirs die mit dem Haft- und Verbindungsmittel in Berührung stehende Kontaktfläche ist.
Bei dieser Ausführungsvariante kann die außenliegende Fläche bzw. Flächen des Grundkörpers aus einem Material gewählt werden, welches noch höhere Festigkeitseigenschaften besitzt als Holz bzw. das holzartige organische Material. Der Grundkörper besteht also aus einer äußeren Hülle und einem inneren Einsatz. Da Holz bzw. holzartiges organisches Material bzw. Holz oder holzartiges organisches Material enthaltende Verbundwerkstoffe selbst hohe Festigkeitseigenschaften aufweisen, kann diese äußere Hülle des Grundkörpers relativ dünn ausgeführt werden, so dass auch bei dieser Ausführungsvariante noch Gewichtseinsparungen und Kosteneinsparungen erzielt werden.

Nach einer weiteren Ausführungsvariante ist das verwendete Holz fällfrisch oder waldfrisch oder das Holz ist akklimatisiert.

Je nach dem vorgesehenen Anwendungsfall, also muss das Befestigungselement sehr hohe oder weniger hohe Festigkeitseigenschaften aufweisen, wird als Holz Kernholz oder Splintholz eingesetzt, wobei für hohe Festigkeitseigenschaften Kernholz oder Hartholz verwendet wird.

Die Erfinder haben in ihren zahlreichen Versuchen herausgefunden, dass das für die Aushärtung des Haft- und Verbindungsmittels benötigte Wasser, also die benötigte Menge an Wasser, durch das im Holz vorhandene so genannte freie Wasser bereitgestellt werden kann. Dieser erkannte Sachverhalt ist insbesondere dahingehend ein Vorteil, weil trotz der Abgabe des freien Wassers - hier an das Haft- und Verbindungsmittel - an dem betreffenden Holz keine Veränderung seiner physikalisch-mechanischen Eigenschaften eintritt.
Das weiterhin im Holz vorhandene gebundene Wasser steht dem Aushärteprozess des Haft- und Verbindungsmittels als zusätzliche Wasserreserve zur Verfügung.

Für den Einsatz von erfindungsgemäßen Befestigungselementen in so genannten Feuchträumen, wie zum Beispiel Toiletten, Bäder, Kellerräume, Waschräume, Waschstraßen, Räumen zum Trocknen von Wäsche, Küchen, Küchennebenräume und dergleichen mehr, werden vorteilhaft Hölzer mit einer niedrigen Fasersättigung verwendet. Diese Hölzer besitzen stabile mechanische Eigenschaften bei dem hier vorhandenen Raumklima.

Nachfolgend wird die Erfindung anhand von in den beigefügten Zeichnungen schematisch gezeigten Ausführungsvarianten näher und in weiteren Details beschrieben und dargestellt. Diese Ausführungsvarianten sind nicht einschränkend.

Es zeigen:
- Fig. 1: eine Schnittdarstellung eines Grundkörpers einer ersten Ausführungsvariante des erfindungsgemäßen Befestigungselements;
- Fig. 1a: eine Ansicht von links auf die Darstellung nach Figur 1;
- Fig. 2: eine Schnittdarstellung eines Grundkörpers einer zweiten Ausführungsvariante des erfindungsgemäßen Befestigungselements;
- Fig. 2a: eine Ansicht von links auf die Darstellung nach Figur 2;
- Fig. 3: eine Schnittdarstellung eines Grundkörpers einer dritten Ausführungsvariante des erfindungsgemäßen Befestigungselements;
- Fig. 4: eine Schnittdarstellung eines Grundkörpers einer vierten Ausführungsvariante des erfindungsgemäßen Befestigungselements;
- Fig. 5: eine Schnittdarstellung eines Grundkörpers einer fünften Ausführungsvariante des erfindungsgemäßen Befestigungselements, und
- Fig. 6: eine Schnittdarstellung eines Grundkörpers einer sechsten Ausfüh-rungsvariante des erfindungsgemäßen Befestigungselements.

Die in den Figuren angetragenen Bezugsziffern haben jeweils die gleiche Bedeutung, auch wenn sie in der Beschreibung der Ausführungen nicht zu jeder Figur ausdrücklich genannt werden. Begriffe wie "links", "rechts", "oben" oder "unten" sind lediglich bezüglich der Darstellung in den Figuren genannt; in der tatsächlichen Anordnung in der Praxis können sich andere Positionen ergeben. Weiterhin wird darauf hingewiesen, dass die Figuren keine reinen technischen Zeichnungen sind, weshalb teilweise Schraffuren und Abbruchlinien fehlen. Auch können die relativen Dimensionen von der Wirklichkeit abweichen.

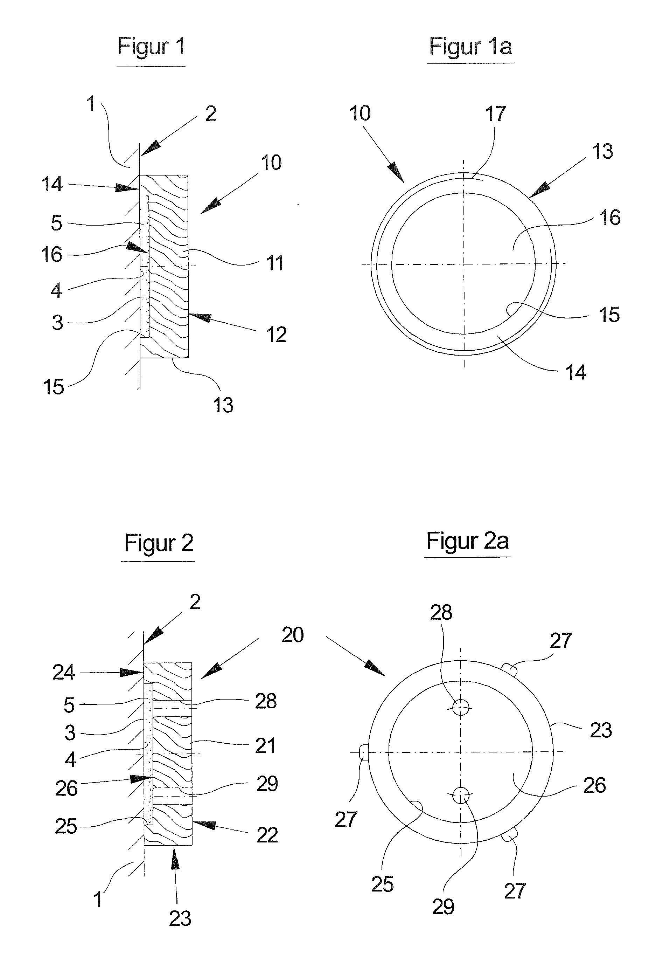

Die Figuren 1 und 1a zeigen eine erste Ausführungsvariante des erfindungsgemäßen Befestigungselements 10. Es 10 besteht aus einem Grundkörper 11, hier vorteilhaft kreisrund, welcher nach der Erfindung vollständig aus Holz besteht. In der Schnittdarstellung nach Figur 1 ist dieser Grundkörper 11 bereits an einem Flächenabschnitt einer Montageunterlage 1, einer Wandfläche 2, durch Klebung befestigt.
Zur Ausbildung eines Klebespaltes 5 zwischen dem Grundkörper 11 und der Montageunterlage 1 besitzt der Grundkörper 11 bodenseitig eine Ausnehmung 15 derart, dass bodenseitig und angrenzend zu seiner Seitenfläche 13 eine kreisringförmige Bodenfläche 14 und einwärts eine Innenfläche 16 gebildet ist. Die Bodenfläche 14 liegt an dem Flächenabschnitt 2 der Montageunterlage 1 an und grenzt dabei einen Kontaktbereich 4 an dem Flächenabschnitt 2 ein. Dieser Kontaktbereich 4, die umlaufende Seitenwand der Ausnehmung 15 (in der Figur ohne Bezugszeichen) und die Innenfläche 16 umschließen einen Raum, den Klebespalt 4, in welchem sich das Haft- und Verbindungsmittel 3 befindet, für die Befestigung des Grundkörpers 11 an dem Flächenabschnitt 2 durch Klebung.
Die gesamte Innenfläche 16 des Grundkörpers 11 ist zugleich die Kontaktfläche über welche das anhaftende feuchtigkeitshärtende Haft- und Verbindungsmittel 3 für seine Aushärtung das benötigte Wasser in der im jeweiligen Zeitfenster des mehrere Stunden dauernden Aushärteprozesses benötigten Menge erhält. Da bei dieser ersten Ausführungsvariante der Grundkörper 11 vollständig aus Holz besteht kann das Haft- und Verbindungsmittel 3 auch aus der umlaufenden, den Klebespalt 5 mitbildenden Seitenfläche der Ausnehmung 15 Wasser beziehen, was positiv auf eine Verkürzung der Aushärtezeit wirkt.
Zur Fixierung des Grundkörpers 11 an dem Flächenabschnitt 2 der Montageunverlage 1, also für den Beginn des Klebevorgangs, wird an der kreisringförmigen Bodenfläche 14 zum Beispiel eine sehr dünne, beidseitig klebende Scheibe aufgelegt, zum Beispiel eine Folie, und der Grundkörper 11 sodann an dem Flächenabschnitt 2 orientiert und positioniert.
Bei dieser ersten Ausführungsvariante wird vor der Positionierung des Grundkörpers 11 in der Ausnehmung 15 ausreichend Haft-und Verbindungsmittel 3 eingefüllt. Im Bereich der Ausnehmung 15 des Grundkörpers 11 sind, was in der Zeichnung nicht dargestellt ist, noch ein oder mehrere Ausweichräume, vorzugsweise in Form von Kuhlen oder Grundbohrungen, vorgesehen, in welche überschüssiges Haft- und Verbindungsmittel 3 beim Positionieren des Grundkörpers 11 an dem Flächenabschnitt 2 ausweichen kann. Hierdurch wird erreicht, dass der Klebespalt 5 vollständig mit Haft-und Verbindungsmittel 3 ausgefüllt ist, jedoch das Haft-und Verbindungsmittel 3 nicht unter einer Spannung steht, welche den Grundkörper 11 von dem Flächenabschnitt 2 wegdrücken würde.

Bei dieser ersten Ausführungsvariante ist in der Seitenfläche 13 des Grundkörpers 11 des Befestigungselementes 10 ein Außengewinde 17 angebracht. Ein eingangs genannter Gegenstand, zum Beispiel ein Handtuchhalter, wird mit dem an ihm vorgesehenen Gewinde auf den Grundkörper 11 aufgeschraubt bis eine ebenfalls an dem Gegenstand vorgesehene Fläche an der Frontfläche 12 des Grundkörpers 11 anliegt, sodass dieser Gegenstand ortsfest befestigt ist.

Die Figuren 2 und 2a zeigen eine zweite Ausführungsvariante der Erfindung, das zweite Befestigungselement 20. Sein Grundkörper 21 hat zunächst die gleiche Gestalt wie der Grundkörper 11. Dieser Grundkörper 21 ist ebenfalls vollständig aus dem Werkstoff Holz. Er unterscheidet sich zu der vorher beschriebenen Ausführungsvariante mit zwei Durchgangsbohrungen 28, 29, welche von seiner Ausnehmung 25 aus bis in seine Frontfläche 22 reichen und selbige durchbrechen.

Der Zweck dieser Durchgangsbohrungen ist bereits aus der eingangs genannten WO 03 / 036 106 A1 bekannt. Nach der Orientierung und Positionierung des Grundkörpers 21 an dem Flächenabschnitt 2 wird vorzugsweise über die Durchgangsbohrung 28 das Haft- und Verbindungsmittel 3 in den gebildeten Klebespalt 5 eingefüllt und überschüssiges Haft-und Verbindungsmittel 3 kann über die zweite Durchgangsbohrung 29 entweichen.
Die Anordnung / Lage dieser beiden Durchgangsbohrungen 28 und 29 in dem Grundkörper 21 ist in den Figuren 2 und 2a nur beispielhaft gezeigt. Unter Berücksichtigung der Konsistenz des Haft- und Verbindungsmittels 3, zum Beispiel seiner Fließfähigkeit, und/oder der räumlichen Lage des Flächenabschnittes 2 könnte ihre Anordnung auch anders als hier gezeigt sein.

Für die Befestigung eines besagten Gegenstandes, zum Beispiel ein Handtuchhalter, sind an der Seitenfläche 23 des Grundkörpers 21 mehrere Halteelemente 27 angeordnet. Diese Halteelemente 27 sind aus dem Stand der Technik bekannt. Diese Halteelemente können eine Bajonettverbindung, eine Keil-Klemmverbindung, eine Einrenkverbindung, eine Stiftverbindung oder dergleichen lösbare Verbindungselemente sein.

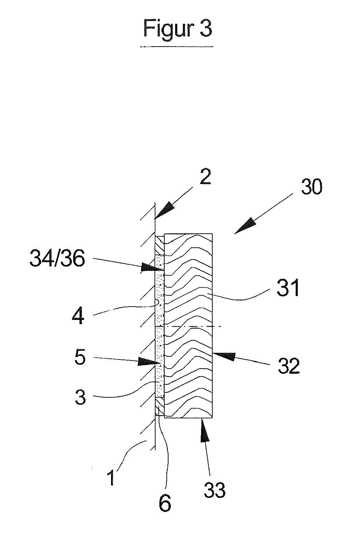

Die Figur 3 zeigt eine dritte Ausführungsvariante der Erfindung, das dritte Befestigungselement 30. Sein Grundkörper 31 hat in seiner Bodenfläche 34 keine Ausnehmung, wie sie in den beiden vorgenannten Ausführungsvarianten vorgesehen ist. Für die Orientierung und Positionierung des Grundkörpers 31 an dem Flächenabschnitt 2 wird an seiner Bodenfläche 34, im Bereich zu seiner Seitenfläche 33 hin, ein doppelseitig klebender Fixierring 6 angeordnet, welcher jedoch nicht dünn ausgeführt ist, sondern eine entsprechende Höhe hat, sodass er zugleich ein Abstandsring 6 ist. Dieser kombinierte Fixier- und Abstandsring 6, das heißt seine gewählte Höhe, bestimmen auch die Höhe des Klebespaltes 5. Der innen vom Fixier- und Abstandsring 6 liegende Bereich der Bodenfläche 34 ist zugleich die Kontaktfläche 36, an welcher das Haft- und Verbindungsmittel 3 anliegt und über welche selbiges das Wasser für seinen Aushärteprozess bezieht.

In weiteren Ausführungsformen kann der Grundkörper neben der kreisrunden Gestaltung auch andere geometrische Formen annehmen und kann die Einfüllöffnung auch an anderer Stelle des Grundkörpers vorgesehen sein.

Bei der ersten, der zweiten und der dritten Ausführungsvariante bildet das Material des gesamten Grundkörpers ein Wasserreservoir, welches aus dem Holzkörper selbst besteht, in welchem Wasser vorhanden ist, die körpereigene Feuchte.
Dieses Material wirkt besonders vorteilhaft mit dem oben beschriebenen Haft- und Verbindungsmittel 3 zusammen. Da Holz in sehr vielen Variationen vorhanden und erhältlich ist, kann das Wasserreservoir optimal auf den Einsatzort bzw. Einsatzzweck des Befestigungselementes angepasst / ausgewählt werden. Die Variationen des Holzes sind seine Parameter wie zum Beispiel die Dichte, die Feuchte, seine Festigkeitseigenschaften und dergleichen mehr.
Bei der Verwendung von Sintermetallscheiben nach dem Stand der Technik als Wasserspeicher sind zwar auch mehrere Produktvarianten für die verschiedenen Einsatzzwecke und Einsatzorte möglich, jedoch ist deren Herstellung und Lagerhaltung wesentlich kostenintensiver.

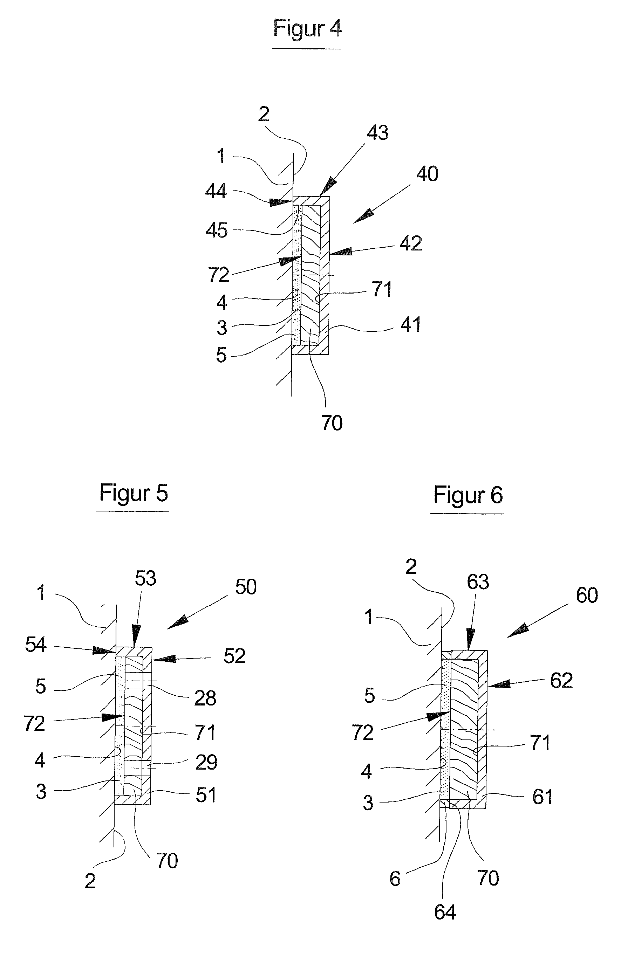

In den Figuren 4, 5 und 6 sind drei weitere Ausführungsvarianten der Erfindung, das vierte Befestigungselement 40, das fünfte Befestigungselement 50 und das sechste Befestigungselement 60 gezeigt und in Verbindung mit der Bezugszeichenliste erklärt.
Im Gegensatz zu den ersten drei Ausführungsvarianten bildet hier nicht das Material des gesamten Grundkörpers 41, 51 bzw. 61 das Wasserreservoir im Sinne der vorliegenden Erfindung. Stattdessen ist hier ein kreisscheibenförmiger Einlagekörper 70 als Wasserreservoir vorgesehen. Dieser Einlagekörper 70 ist ebenfalls aus Holz und in den Grundkörper 41, 51 bzw. 61 eingelegt und fixiert.

Die Grundkörper 41, 51 und 61 sind glockenförmig geformt, sie bilden einen Hohlzylinder mit einer Grundfläche, wobei jeweils ihre kopfseitige Frontfläche 42, 52 bzw. 62 die besagte Grundfläche ist. Die Wandstärke dieser glockenförmigen Grundkörper 41, 51 bzw. 61 ist im Verhältnis zu der Dicke des Einlagekörpers 70 relativ dünn. Müssen diese Grundkörper 41, 51 bzw. 61 wegen den zu erreichenden Festigkeitswerten aus einem Kunststoff-Metall-Composite oder vollständig aus Metall sein, so ergibt sich durch diese erfindungsgemäße Gestaltung ein relativ geringes Gewicht und zudem Materialkosteneinsparungen.

Die Orientierung und Positionierung dieser Grundkörper 41, 51 bzw. 61 an dem Flächenabschnitt 2 der Montageunterlage 1 sowie das Einfüllen des Haft- und Verbindungsmittels 3 in den gebildeten Klebespalt 5 erfolgt in gleicher Art und Weise wie es voranstehend zu den ersten drei Ausführungsbeispielen schon beschrieben wurde.
Das vierte Befestigungselement 40 ist fußseitig ähnlich dem ersten Befestigunselement 10. Das fünfte Befestigungselement 50 ist fußseitig ähnlich dem zweiten Befestigungselement 20 und besitzt ebenfalls zwei Durchgangsbohrungen 28 und 29. Das sechste Befestigungselement 60 ist fußseitig ähnlich dem dritten Befestigungselement 30. An seiner fußseitigen Randfläche 64 ist ebenfalls ein kombinierter Fixier- und Abstandsring 6 angeordnet.

Die Kopffläche 71 des Einlagekörpers 70 zeigt zur Innenseite der kopfseitigen Frontfläche 42, 52 bzw. 62. Seine Fußfläche 72 bildet die Kontaktfläche, an welcher das Haft- und Verbindungsmittel 3 anliegt und aus welcher das Haft und Verbindungsmittel 3 für seinen Aushärteprozess das Wasser bezieht.

Alle in der vorstehenden Beschreibung erwähnten sowie auch die allein aus den Zeichnungen entnehmbaren Merkmale sind weitere Bestandteile der Erfindung auch wenn sie nicht besonders hervorgehoben und nicht in den Ansprüchen erwähnt sind.
Die Erfindung ist nicht auf die Ausführungsbeispiele beschränkt, sondern im Rahmen der Offenbarung vielfach variabel. So gehört zu der Erfindung auch eine Ausführungsvariante bei der dem feuchtigkeitshärtenden Haft- und Verbindungsmittel kurz vor seiner Einfüllung in den Klebespalt ein Holzgranulat beigemischt, besser gesagt untergemischt wird.

### Bezugszeichenliste

- 1: Montageunterlage (Wand, Objekt)
- 2: Wandfläche (Flächenabschnitt der Montageunterlage)
- 3: Haft- und Verbindungsmittel
- 4: Kontaktbereich (von Pos. 2)
- 5: Aufnahmeraum/Klebespalt
- 6: Fixier- und Abstandsring

- 10: erstes Befestigungselement (gemäß erster Ausführungsvariante)
- 11: Grundkörper
- 12: Frontfläche (rechte Fläche in Figur 1)
- 13: Seitenfläche
- 14: Bodenfläche (linke Fläche in Figur 1)
- 15: Ausnehmung
- 16: Kontaktfläche (Innenfläche von Pos 11)
- 17: Außengewinde (in Pos. Punkt 13)

- 20: zweites Befestigungselement (gemäß zweiter Ausführungsvariante)
- 21: Grundkörper
- 22: Frontfläche (rechte Fläche in Figur 2)
- 23: Seitenfläche
- 24: Bodenfläche (linke Fläche in Figur 2)
- 25: Ausnehmung
- 26: Kontaktfläche (Innenfläche von Pos 21)
- 27: Halteelemente
- 28: erste Durchgangsbohrung
- 29: zweite Durchgangsbohrung

- 30: drittes Befestigungselement (gemäß dritter Ausführungsvariante)
- 31: Grundkörper
- 32: Frontfläche (rechte Fläche in Figur 3)
- 33: Seitenfläche
- 34: Bodenfläche (linke Fläche in Figur 3)
- 36: Kontaktfläche (hier zugleich Bodenfläche 34)

- 40: viertes Befestigungselement (gemäß vierter Ausführungsvariante)
- 41: Grundkörper (glockenförmig, Hohlzylinder mit Boden)
- 42: kopfseitige Frontfläche (rechte Fläche in Figur 4)
- 43: Seitenfläche
- 44: fußseitige Randfläche
- 45: Innenraum

- 50: fünftes Befestigungselement (gemäß fünfter Ausführungsvariante)
- 51: Grundkörper (glockenförmig, Hohlzylinder mit Boden)
- 52: kopfseitige Frontfläche (rechte Fläche in Figur 5)
- 53: Seitenfläche
- 54: fußseitige Randfläche

- 60: sechstes Befestigungselement (gemäß sechster Ausführungsvariante
- 61: Grundkörper (glockenförmig, Hohlzylinder mit Grundfläche)
- 62: kopfseitige Frontfläche (rechte Fläche in Figur 6)
- 63: Seitenfläche
- 64: fußseitige Randfläche

- 70: Einlagekörper
- 71: Kopffläche
- 72: Fußfläche

## Patentansprüche

1. Befestigungselement zur ortsfesten Anbringung von Gegenständen, wie Handtuchhalter, Regale, Leuchten, Haltegriffe, Badschränke oder dergleichen Ausstattungsartikel, an einer Montageunterlage, wie zum Beispiel einer Wand, Decke, Boden oder dergleichen Fläche, z. B. in mit Kacheln oder mit dergleichen Wandverkleidungen ausgestatteten Räumen, wobei das Befestigungselement (10; 20; 30; 40; 50 bzw. 60) einen Grundkörper (11; 21; 31; 41; 51 bzw. 61) umfasst, der zur Aufnahme eines Elementes zur Halterung des Gegenstandes ausgebildet ist, und wobei der Grundkörper (11; 21; 31; 41; 51 bzw. 61) mittels eines feuchtigkeitshärtenden oder -vernetzenden Haft- und Verbindungsmittels (3) an der Montageunterlage (2) befestigbar ist,
**dadurch gekennzeichnet, dass** der Grundkörper (11; 21; 31; 41; 51 bzw. 61) wenigstens teilweise derart als Wasserreservoir ausgebildet ist oder in ihm ein Wasserreservoir derart aufgenommen ist, dass das Haft- und Verbindungsmittel (3) aus einer Kontaktfläche (16; 26; 36 bzw. 72) des Grundkörpers (11; 21; 31; 41; 51 bzw. 61), an welcher es (3) anliegt, zum Aushärten Wasser aus dem Wasserreservoir erhält, wobei das Wasserreservoir zumindest teilweise aus Holz oder holzartigem organischen Material besteht.

2. Befestigungselement nach Anspruch 1,
**dadurch gekennzeichnet, dass**
das Wasserreservoir vollständig aus Holz oder holzartigem organischen Material ist.

3. Befestigungselement nach Anspruch 1,
**dadurch gekennzeichnet, dass**
das Wasserreservoir vollständig aus einem Holz oder holzartiges organisches Material enthaltenden Verbundwerkstoff ist.

4. Befestigungselement nach Anspruch 1,
**dadurch gekennzeichnet, dass**
der Grundkörper (11; 21; 31; 41; 51 bzw. 61) vollständig aus Holz oder holzartigem organischen Material ist.

5. Befestigungselement nach Anspruch 1, 2 oder 3,
**dadurch gekennzeichnet, dass**
das aus Holz oder holzartigem organischen Material oder aus einem Holz oder holzartiges organisches Material enthaltenden Verbundwerkstoff bestehende Wasserreservoir (70) in dem Grundkörper (11; 21; 31; 41; 51 bzw. 61) aufgenommen und fixiert ist, wobei eine Fläche dieses eingesetzten und fixierten Wasserreservoirs (70) die mit dem Haft- und Verbindungsmittel (3) in Berührung stehende Kontaktfläche (71) ist.

6. Befestigungselement nach Anspruch 1, 2, 3, 4 oder 5,
**dadurch gekenntzeichnet, dass**
das Holz fällfrisch ist.

7. Befestigungselement nach Anspruch 1, 2, 3, 4 oder 5,
**dadurch gekennzeichnet, dass**
das Holz waldfrisch ist.

8. Befestigungselement nach Anspruch 1, 2, 3, 4 oder 5,
**dadurch gekennzeichnet, dass**
das Holz akklimatisiert ist.

9. Befestigungselement nach Anspruch 1, 2, 3, 4, 5, 6, 7 oder 8,
**dadurch gekennzeichnet, dass**
das Holz Kernholz ist.

10. Befestigungselement nach Anspruch 1 , 2, 3, 4, 5, 6, 7 oder 8,
**dadurch gekenkezeichnet, dass**
das Holz Splintholz ist.
